# EUROPEAN PATENT APPLICATION

(11) **EP 4 712 519 A1**
(43) Date of publication of application: **18.03.2026**
(21) Application number: 24823682.0
(22) Date of filing: 11.06.2024
(51) Int. Cl.: H04W 4/70, H04W 8/00, H04W 76/22, H04W 12/08, H04W 48/16, H04W 84/12

(54) **ELECTRONIC DEVICE FOR CONTROLLING EXTERNAL ELECTRONIC DEVICE AND OPERATING METHOD THEREOF**

(30) Priority: 13.06.2023 KR 20230075814; 20.07.2023 KR 20230094501
(71) Applicant: Samsung Electronics Co., Ltd., Suwon-si, Gyeonggi-do 16677 (KR)
(72) Inventor: CHOI, Junsu, Suwon-si, Gyeonggi-do 16677 (KR); KANG, Doosuk, Suwon-si, Gyeonggi-do 16677 (KR); KIM, Gibeom, Suwon-si, Gyeonggi-do 16677 (KR); YANG, Changmok, Suwon-si, Gyeonggi-do 16677 (KR); YUN, Jusik, Suwon-si, Gyeonggi-do 16677 (KR); LEE, Sangsoo, Suwon-si, Gyeonggi-do 16677 (KR); LEE, Sunkee, Suwon-si, Gyeonggi-do 16677 (KR); CHO, Siejoon, Suwon-si, Gyeonggi-do 16677 (KR)
(74) Representative: HGF
(86) International application number: PCT/KR2024/008004
(87) International publication number: WO 2024/258164

(57) **Abstract**

An embodiment of the present invention relates to an apparatus and a method for controlling an external electronic device by an electronic device. The electronic device may comprise a communication circuit and a processor, wherein the processor identifies a second AP to which an external electronic device to be controlled by the electronic device is connected, connects to the second AP when a first AP to which the electronic device is connected and the second AP are different from each other, and transmits data related to control to the external electronic device on the basis of the connection to the second AP. Other embodiments may also possible.

## Description

### [Technical Field]

Embodiments of the disclosure relates to a device and a method for controlling an external electronic device by an electronic device.

### [Background Art]

With the development of wireless communication technology, communication functions are included in various devices to form a network, providing a function of Internet of Things (e.g., IoT) that conveniently exchanges information with devices.

IoT functions may be applied to various fields such as smart homes, smart buildings, smart cities, smart cars (or connected cars), smart grids, healthcare, smart home appliances, or advanced medical services.

### [Disclosure of Invention]

### [Technical Problem]

An electronic device (e.g., smartphone) may provide various IoT-based services by utilizing various devices including communication functions. The electronic device may control (or manage) various devices by executing IoT-related application programs

The electronic device may control various devices included in the same subnet as the electronic device based on wireless LAN (e.g., wireless local area network (WLAN) communication. For example, subnets may be divided based on an access point (AP) (or a gateway) for wireless LAN communication.

When an electronic device located in a space (e.g., an office or home) in which multiple APs (or gateways) are installed is connected to an AP that is different from devices related to IoT among the plurality of APs, the control of the devices may be limited.

Embodiments of the disclosure disclose a device and method for controlling at least one external electronic device based on wireless LAN communication in an electronic device.

The technical challenges addressed in this document are not limited to those mentioned above, and other technical challenges not mentioned will be readily apparent to those skilled in the art from the description below.

### [Solution to Problem]

According to an embodiment, an electronic device may include a communication circuit supporting wireless LAN communication, at least one processor operatively connected to the communication circuit and memory storing instructions. According to an embodiment, the instructions, when executed by the at least one processor, cause the electronic device to identify a second access point (AP) to which an external electronic device to be controlled by the electronic device is connected. According to an embodiment, the instructions, when executed by the at least one processor, cause the electronic device to connect to the second AP when a first AP to which the electronic device is connected and the second AP to which the external electronic device is connected are different from each other. According to an embodiment, the instructions, when executed by the at least one processor, cause the electronic device to transmit control-related data to the external electronic device based on the connection to the second AP.

According to an embodiment, a method performed by an electronic device may include identifying a second access point (AP) to which an external electronic device to be controlled by the electronic device is connected. According to an embodiment, a method performed by an electronic device may include connecting to the second AP when a first AP to which the electronic device is connected and the second AP to which the external electronic device is connected are different from each other. According to an embodiment, a method performed by an electronic device may include transmitting control-related data to the external electronic device based on the connection to the second AP.

According to an embodiment, a non-transitory computer-readable storage medium (or computer program product) storing one or more programs may be described. According to an embodiment, the one or more programs may include instructions that, when executed by a processor of an electronic device, performs identifying a second access point (AP) connected to an external electronic device to be controlled by the electronic device, connecting to the second AP when the first AP to which the electronic device is connected and the second AP are different from each other, and transmitting control-related data to the external electronic device based on the connection to the second AP.

### [Advantageous Effects of Invention]

According to an embodiment of the disclosure, an electronic device may control (or manage) external electronic devices related to IoT based on wireless LAN communication by automatically switching the wireless LAN connection of the electronic device based on access point (AP) information of external electronic devices (e.g., IoT devices) related to IoT.

The effects that may be obtained from various embodiments of the disclosure are not limited to the effects mentioned above, and other effects that are not mentioned may be clearly understood by those skilled in the art to which various embodiments of the disclosure belong from the description below.

### [Brief Description of Drawings]

FIG. 1 is a block diagram of an electronic device in a network environment according to an embodiment.
FIG. 2 is an example of a wireless LAN system for providing an IoT function according to an embodiment.
FIG. 3 is a block diagram of an electronic device for providing wireless LAN communication according to an embodiment.
FIG. 4 is an example for identifying an AP of an external electronic device by an electronic device according to an embodiment.
FIG. 5 is a flowchart for controlling an external electronic device by an electronic device according to an embodiment.
FIG. 6A is an example of an application program related to IoT executed in an electronic device according to an embodiment.
FIG. 6B is an example of a user interface for controlling an external electronic device by an electronic device according to an embodiment.
FIG. 7 is a flowchart for switching a wireless LAN connection in an electronic device according to an embodiment.
FIG. 8 is a flowchart for wireless LAN communication in an electronic device according to an embodiment.
FIG. 9 is a flowchart for selecting an AP by an electronic device according to an embodiment.

### [Mode for the Invention]

Hereinafter, embodiments will be described in detail reference to the attached drawings.

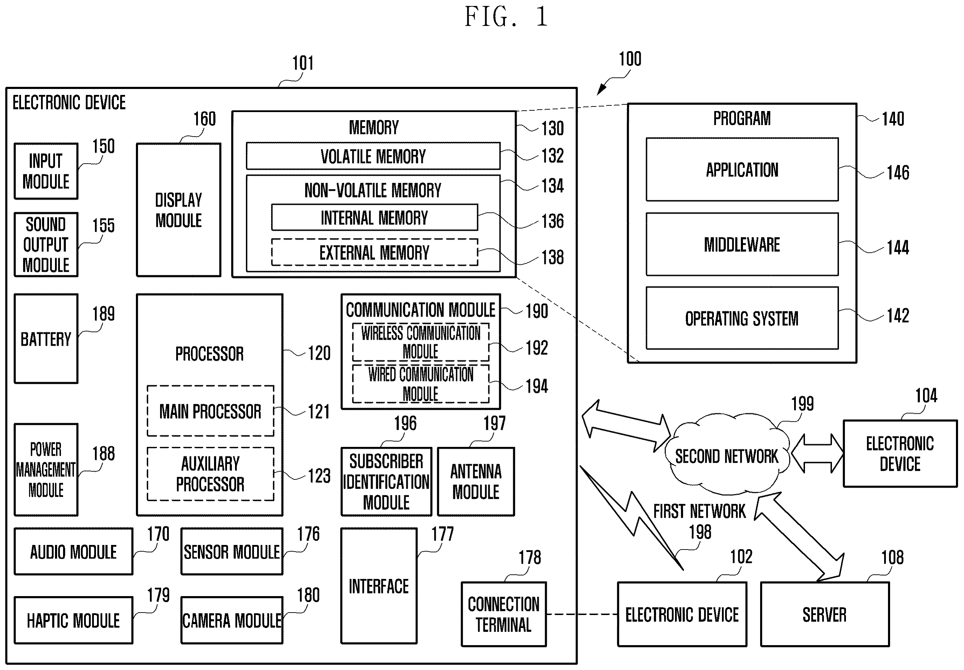

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to one embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

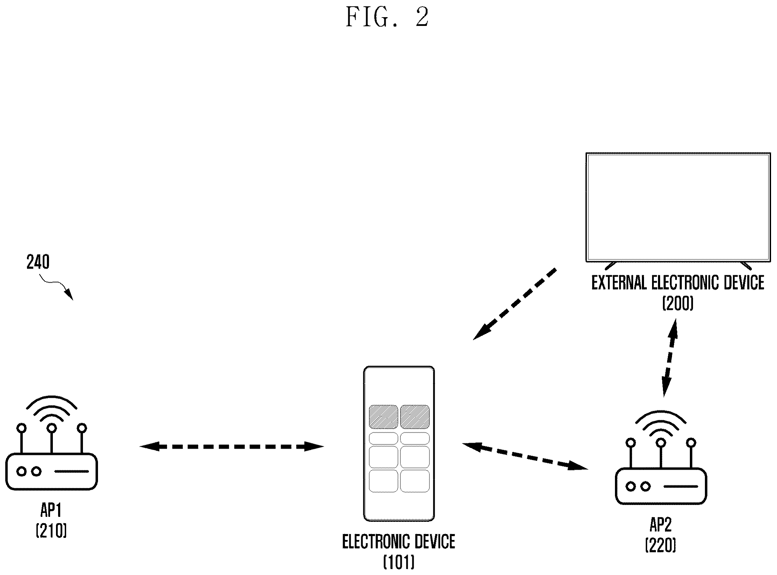

FIG. 2 is an example of a wireless LAN system for providing an IoT function according to an embodiment.

According to an embodiment referring to FIG. 2, a space 240 in which an electronic device 101 is located may include multiple access points (APs) (e.g., AP1 210 and AP2 220). For example, the AP1 210 and AP2 220 are nodes that provide wireless LAN communication within the space 240 and may operate as gateways for wireless LAN communication. For example, wireless LAN communication may include Wi-Fi. For example, the space in which the electronic device 101 is located may include at least one of a home, an office, a building, a workplace, or a hospital.

According to an embodiment, when the electronic device 101 is located in the space 240, wireless LAN communication may be performed through the AP1 210 or the AP2 220. For example, the electronic device 101 may be connected to the AP1 210 or the AP2 220 based on the channel state information of the AP1 210 and the AP2 220. For example, the channel state information may include at least one of the received signal strength indicator (RSSI), reference signal received quality (RSRQ), reference signal received power (RSRP), signal to interference and noise ratio (SINR), or bit error rate (BER). For example, the electronic device 101 may be connected to the AP1 210 or the AP2 220 selected based on at least one of user input or wireless LAN access history.

According to an embodiment, an external electronic device 200 may be connected (or linked) to the AP2 220 for the function of the Internet of Things (IoT) within the space 240. Based on the connection to the AP2 220, the external electronic device 200 may transmit information related to the external electronic device 200 to at least one of a server (e.g., the server 108 of FIG. 1) or the electronic device 101. For example, the AP2 220 to which the external electronic device 200 is connected may represent a subnet formed by the AP2 220. For example, the server may include a separate device that stores and manages information related to the external electronic device 200 for an IoT function. For example, the information related to the external electronic device 200 may include at least one of identification information (e.g., international mobile station identity (IMSI) or phone number), identification information (e.g., service set identifier (SSID) of the AP2 220 to which the external electronic device 200 is connected, or security information of the AP2 220. For example, the security information of the AP2 220 may include information related to a password for connection to the AP2 220.

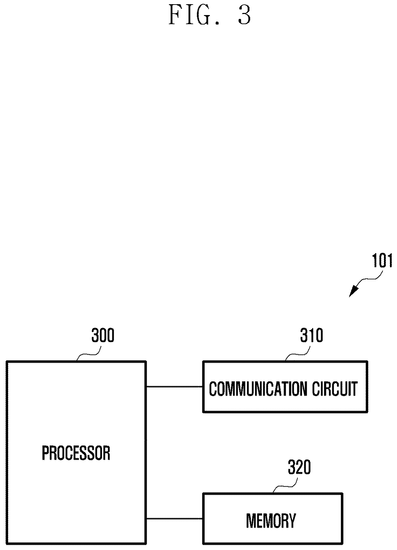

According to an embodiment, when the electronic device 101 detects the occurrence of an event related to the control of the external electronic device 200, the electronic device 101 may identify an AP (e.g., the AP2 220) (or a subnet) to which the external electronic device 200 is connected. For example, the electronic device 101 may identify the AP2 220 to which the external electronic device 200 is connected for the Internet of Things function based on information related to the external electronic device 200 obtained from at least one of the external electronic device 200 or the server. For example, the electronic device 101 may identify the AP2 220 to which the external electronic device 200 is connected for the Internet of Things function based on information related to the external electronic device 200 previously stored in the electronic device 101 (e.g., the memory 320 of FIG. 3). For example, an event related to the control of the external electronic device 200 may occur based on at least one of a user input (e.g., a touch input), a gesture input, a location change of the electronic device 101, an execution of an application (or function), or a reception of a control signal related to the control of the external electronic device 200. For example, the location change of the electronic device 101 may include a series of operations in which the electronic device 101 enters (or is located) a designated area related to the external electronic device 200. For example, the designated area is an area in which the external electronic device 200 is determined to be located (or positioned) and may be configured based on at least one of a user input or the location of the external electronic device 200. For example, the location of the external electronic device 200 may include the location of the external electronic device 200 obtained at the time when the external electronic device 200 is registered in the server. For example, the location of the external electronic device 200 may be obtained based on a designated position estimation method related to the external electronic device 200 (e.g., an IoT device). For example, the designated position estimation method may include at least one of a position estimation method based on a satellite signal (e.g., a global positioning system (GPS) signal), a position estimation method based on a wireless signal (e.g., a radio frequency (RF) signal) with a communication network (e.g., a triangulation method), or a method of estimating a relative position with the electronic device 101 based on a signal received from the external electronic device 200.

According to an embodiment, when the AP (or subnet) of the electronic device 101 and the AP (e.g., the AP2 220) (or subnet) to which the external electronic device 200 is connected are the same, the electronic device 101 may transmit or receive at least one of signals or data with the external electronic device 200 through the AP (e.g., the AP2 220) of the electronic device 101. For example, the electronic device 101 may transmit data related to the control of the external electronic device 200 to the external electronic device 200 through the AP (e.g., the AP2 220) of the electronic device 101. For example, an AP of the electronic device 101 may indicate an AP (or subnet) to which the electronic device 101 is connected (or linked) for wireless LAN communication.

According to an embodiment, when the AP (or subnet) of the electronic device 101 and the AP (e.g., the AP2 220) (or subnet) to which the external electronic device 200 is connected are different from each other, the electronic device 101 may switch (or change) wireless LAN communication (or subnet) of the electronic device 101 based on information related to the AP to which the external electronic device 200 is connected. For example, switching wireless LAN communication may include a series of operations that switch the AP (e.g., the AP1 210) to which the electronic device 101 is connected to the AP (e.g., the AP2 220) to which the external electronic device 200 is connected. For example, the electronic device 101 may transmit data related to the control of the external electronic device 200 to the external electronic device 200 through the switched AP (e.g., the AP2 220) of the electronic device 101 based on the switching of wireless LAN communication.

According to an embodiment, when the control of the external electronic device 200 is terminated, the electronic device 101 may switch the AP for wireless LAN communication. For example, when the control of the external electronic device 200 is terminated, the electronic device 101 may identify (or select) an AP to which the electronic device 101 may connect through a search (or scan) related to the AP. The electronic device 101 may perform wireless LAN communication by connecting to an AP to which the electronic device 101 may connect. For example, the AP to which the electronic device 101 may connect may be identified (or selected) based on at least one of channel state information and wireless LAN access history.

FIG. 3 is a block diagram of an electronic device for providing wireless LAN communication according to an embodiment.

According to an embodiment referring to FIG. 3, the electronic device 101 may include at least one of a processor 300, a communication circuit (or communication circuitry) 310, and a memory 320. According to an embodiment, the processor 300 may be substantially the same as the processor 120 of FIG. 1 or may include the processor 120. The communication circuit 310 may be substantially the same as the wireless communication module 192 of FIG. 1 or may include the wireless communication module 192. The memory 320 may be substantially the same as the memory 130 of FIG. 1, or may include the memory 130. According to an embodiment, the processor 300 may be operatively, functionally or electrically connected to at least one of the communication circuit 310 and the memory 320. For example, the processor 300 may include at least one processor including a processing circuit.

According to an embodiment, when multiple APs (e.g., the AP1 210 and the AP2 220 of FIG. 2) exist in a space (e.g., the space 240 of FIG. 2) where the electronic device 101 is located, the processor 300 may control the communication circuit 310 to connect to one (e.g., the AP1 210 or the AP2 220) of multiple APs. For example, the processor 300 may select an AP (e.g., the AP1 210 or the AP2 220) having a relatively good channel state among the AP1 210 and the AP2 220 as the AP to which the electronic device 101 may connect. For example, the channel state information may include at least one of the received signal strength indicator (RSSI), reference signal received quality (RSRQ), reference signal received power (RSRP), signal to interference and noise ratio (SINR), or bit error rate (BER). For example, the processor 300 may select an AP to which the electronic device 101 may connect among the AP1 210 and the AP2 220 based on at least one of a user input or a wireless LAN access history.

According to an embodiment, when the processor 300 detects the occurrence of an event related to the control of the external electronic device 200, the processor 300 may identify an AP (e.g., the AP2 220) (or a subnet) to which the external electronic device 200 is connected. For example, when at least one of a user input (e.g., a touch input) or a gesture input related to the control of the external electronic device 200 is detected, the processor 300 may determine that an event related to the control of the external electronic device 200 has occurred. For example, the processor 300 may determine that an event related to the control of the external electronic device 200 has occurred based on the execution of an application program related to the control of the external electronic device 200. For example, the processor 300 may determine that an event related to the control of the external electronic device 200 has occurred based on the reception of information related to the external electronic device 200. For example, the information related to the external electronic device 200 may be received through Bluetooth or Bluetooth low energy (BLE). For example, the information related to the external electronic device 200 may include at least one of identification information (e.g., IMSI or phone number) of the external electronic device 200, identification information (e.g., SSID) of the AP (e.g., the AP2 220) to which the external electronic device 200 is connected, or security information of the AP (e.g., the AP2 220) to which at least one of the external electronic devices 200 is connected. For example, the processor 300 may determine that an event related to the control of the external electronic device 200 has occurred when the electronic device 101 enters a designated area (or a designated place) (e.g., the space 240 of FIG. 2). For example, the designated area is an area configured by the electronic device 101 to use the Internet of Things, and may include a space (or an area) located (or positioned) by at least one external electronic devices 200 that may be controlled by the electronic device 101. For example, the designated area may be configured based on at least one of a user input or a location of the external electronic device 200. For example, the location of at least one of the electronic device 101 or the external electronic device 200 may be obtained based on a designated position estimation method. For example, the designated position estimation method may include at least one of a position estimation method (e.g., a GPS estimation method) based on a satellite signal, a position estimation method (e.g., a triangulation method) based on a wireless signal with a communication network, or a method of estimating a relative position with the electronic device 101 (or the external electronic device 200) based on a received signal from the external electronic device 200 (or the electronic device 101).

For example, when it is determined that the distance between the electronic device 101 and the external electronic device 200 is within a specified reference distance, the processor 300 may determine that an event related to the control of the external electronic device 200 has occurred.

For example, the processor 300 may identify the AP2 220 to which the external electronic device 200 is connected for the Internet of Things function based on information related to the external electronic device 200 obtained from at least one of the external electronic device 200 or the server.

According to an embodiment, when the AP of the electronic device 101 and the AP (e.g., AP2 220) (or subnet) to which the external electronic device 200 is connected are the same, the processor 300 may control the communication circuit 310 to perform at least one of transmission or reception of signals or data with the external electronic device 200 through the AP (e.g., the AP2 220) of the electronic device 101. For example, the processor 300 may control the communication circuit 310 to transmit data related to the control of the external electronic device 200 to the external electronic device 200 through the AP (e.g., the AP2 220) of the electronic device 101. For example, the AP of the electronic device 101 may indicate an AP (or a subnet) to which the electronic device 101 is connected (or linked) for wireless LAN communication.

According to an embodiment, when the AP of the electronic device 101 and the AP (e.g., AP2 220) (or subnet) to which the external electronic device 200 is connected are different from each other, the processor 300 may control the communication circuit 310 to switch the wireless LAN communication (or subnet) of the electronic device 101 based on information (e.g., at least one of identification information or security information of the AP) related to the AP to which the external electronic device 200 is connected. The processor 300 may control the communication circuit 310 to transmit data related to the control of the external electronic device 200 to the external electronic device 200 through an AP (e.g., the AP2 220) to which the electronic device 101 is connected based on the switching of wireless LAN communication. For example, the processor 300 may control the communication circuit 310 to connect to an AP (e.g., the AP2 220) to which the external electronic device 200 is connected.

According to an embodiment, when the control of the external electronic device 200 is terminated, the processor 300 may control the communication circuit 310 to perform wireless LAN communication through an AP (e.g., the AP2 220) to which the electronic device 101 is connected. For example, the connection with the AP (e.g., the AP2 220) to which the electronic device 101 is connected may be maintained even when the control of the external electronic device 200 is terminated.

According to an embodiment, when the control of the external electronic device 200 is terminated, the processor 300 may control the communication circuit 310 to switch the AP for wireless LAN communication. For example, when the control of the external electronic device 200 is terminated, the processor 300 may control the communication circuit 310 to perform a search (or scan) related to the AP. For example, the search related to the AP may be performed when a channel state with the AP (e.g., the AP2 220) to which the electronic device 101 is connected satisfies a specified switching condition. For example, a state that satisfies the specified switching condition may include a state in which a channel state with the AP (e.g., the AP2 220) to which the electronic device 101 is connected is less than or equal to a specified reference value. For example, the processor 300 may identify (or select) an AP to which the electronic device 101 may connect through a search related to the AP. For example, the AP to which the electronic device 101 may connect may be identified (or selected) based on at least one of channel state information or wireless LAN access history. For example, the processor 300 may control the communication circuit 310 to perform wireless LAN communication through the switched AP of the electronic device 101.

According to an embodiment, the communication circuit 310 may support wireless LAN communication between the electronic device 101 and an external electronic device (e.g., the external electronic device 200 of FIG. 2). According to an embodiment, the communication circuit 310 may include at least one communication circuit (e.g., a WLAN modem) for processing at least one of signals or data transmitted or received through multiple frequency bands.

According to an embodiment, the memory 320 may store various pieces of data used by at least one component (e.g., at least one of the processor 300 or the communication circuit 310) of the electronic device 101. For example, data may be information related to the external electronic device 200.

According to an embodiment, the memory 310 may store various instructions that may be executed through the processor 300.

According to an embodiment, an electronic device (e.g., the electronic device 101 of FIG. 1, FIG. 2, or FIG. 3) may include a communication circuit (e.g., the wireless communication module 192 of FIG. 1 or the communication circuit 310 of FIG. 3) supporting wireless LAN communication, at least one processor (e.g., the processor 120 of FIG. 1 or the processor 300 of FIG. 3) operatively connected to the communication circuit, and memory (e.g., the memory 130 of FIG. 1 or the memory 320 of FIG. 3) storing instructions. According to an embodiment, the instructions, when executed by at least one processor, cause the electronic device to identify a second access point (AP) to which an external electronic device to be controlled by the electronic device is connected. According to an embodiment, the instructions, when executed by at least one processor, cause the electronic device to connect to the second AP when the first AP to which the electronic device is connected and the second AP to which the external electronic device is connected are different from each other. According to an embodiment, the instructions, when executed by at least one processor, cause the electronic device to transmit control-related data to the external electronic device based on the connection to the second AP.

According to an embodiment, the instructions, when executed by at least one processor, cause the electronic device to identify the second AP to which the external electronic device is connected based on information related to the external electronic device stored in the memory when an application program related to the control of the external electronic device is executed.

According to an embodiment, the instructions, when executed by at least one processor, cause the electronic device to identify the second AP to which the external electronic device (200) is connected from the control signal when a control signal related to an AP is received from a server or the external electronic device.

According to an embodiment, the instructions, when executed by at least one processor, cause the electronic device to identify security information related to the second AP when the first AP to which the electronic device is connected and the second AP are different from each other, and connect to the second AP based on the security information related to the second AP.

According to an embodiment, the instructions, when executed by at least one processor, cause the electronic device to identify the second AP to which the external electronic device is connected based on the information related to the external electronic device stored in the memory when it is determined that the electronic device is located in a designated area related to the external electronic device.

According to an embodiment, the instructions, when executed by at least one processor, cause the electronic device to identify whether the second AP is detected when the first AP to which the electronic device is connected and the second AP to which the external electronic device is connected are different from each other, and connect to the second AP when the second AP is detected.

According to an embodiment, the instructions, when executed by at least one processor, cause the electronic device to output information related to the use restriction of the external electronic device when the second AP to which the external electronic device is connected is not detected.

According to an embodiment, the instructions, when executed by at least one processor, cause the electronic device to transmit control-related data to the external electronic device while maintaining the connection with the first AP to which the electronic device is connected when the first AP to which the electronic device is connected and the second AP to which the external electronic device is connected are the same.

According to an embodiment, the instructions, when executed by at least one processor, cause the electronic device to connect to an AP identified through an AP search when it is determined that the control of the external electronic device is terminated.

According to an embodiment, the instructions, when executed by at least one processor, cause the electronic device to identify the channel state with the AP to which the electronic device is connected when it is determined that the control of the external electronic device is terminated and identify an AP to which the electronic device may connect through an AP search when it is determined that the electronic device performs an AP search based on the channel state with the connected AP (e.g., when the specified condition is satisfied).

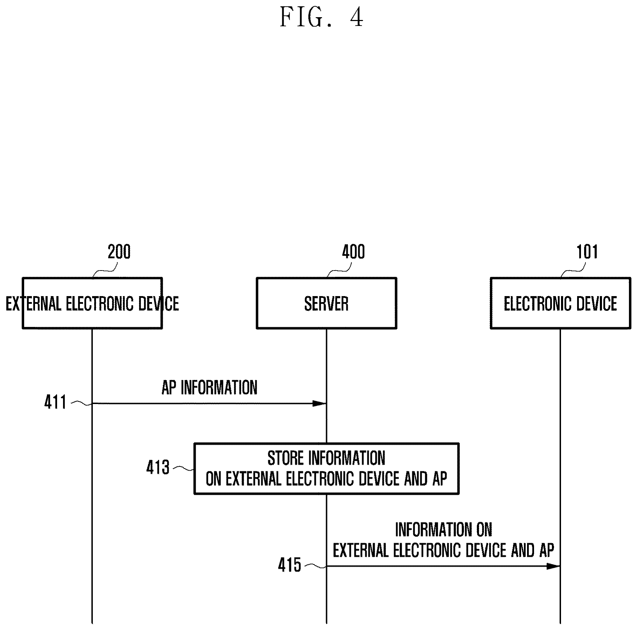

FIG. 4 is an example for identifying an AP of an external electronic device by an electronic device according to an embodiment.

According to an embodiment referring to FIG. 4, the external electronic device 200 may transmit information related to the external electronic device 200 to a server 400 (e.g., the server 108 of FIG. 1) (operation 411). For example, the external electronic device 200 may transmit information related to the external electronic device 200 to the server 400 when the external electronic device is registered in the server 400 (or IoT framework) for the Internet of Things function. For example, when a change (or switch) of information (e.g., an AP to which the external electronic device 200 is connected) related to the external electronic device 200 is detected, the external electronic device 200 may transmit information (or change information) related to the external electronic device 200 to the server 400. For example, the external electronic device 200 may transmit information related to the external electronic device 200 to the server 400 based on a specified period. For example, the information related to the external electronic device 200 may include at least one of identification information (e.g., IMSI or phone number) of the external electronic device 200, identification information (e.g., SSID) of the AP2 220 to which the external electronic device 200 is connected, or security information of the AP2 220. For example, the security information of the AP2 220 may include information related to a password for connecting to the AP2 220.

According to an embodiment, the server 400 may store information related to the external electronic device 200 received from the external electronic device 200 (operation 413). For example, the server 400 may match at least one of the identification information (e.g., SSID) of the AP2 220 or the security information of the AP2 220 to the identification information (e.g., IMSI or phone number) of the external electronic device 200 and store the matched information.

According to an embodiment, the server 400 may transmit information related to the external electronic device 200 to the electronic device 101 (operation 415). For example, when the server 400 receives information related to the external electronic device 200 from the external electronic device 200, the server 400 may transmit information related to the external electronic device 200 to the electronic device 101. For example, when a change in information related to the external electronic device 200 stored in the server 400 is detected, the server 400 may transmit information related to the external electronic device 200 to the electronic device 101. For example, when the electronic device 101 detects the execution of an application program related to the control of the external electronic device 200, the server 400 may transmit information related to the external electronic device 200 to the electronic device 101. For example, the server 400 may transmit information related to the AP2 220 to which the external electronic device 200 is connected to the electronic device 101 based on a specified period.

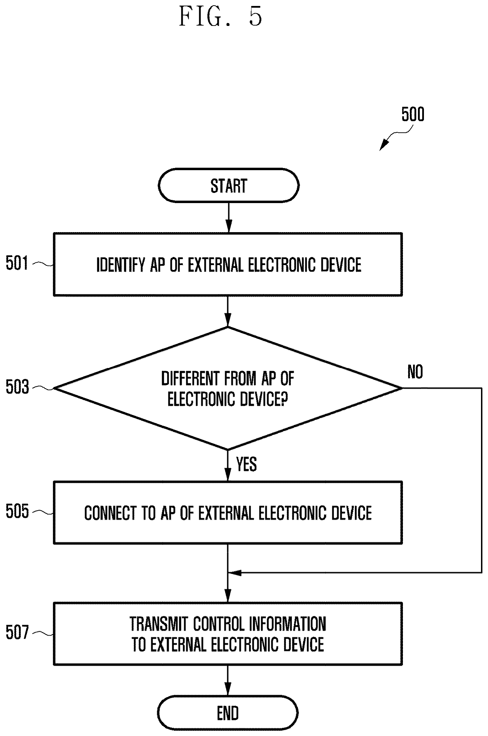

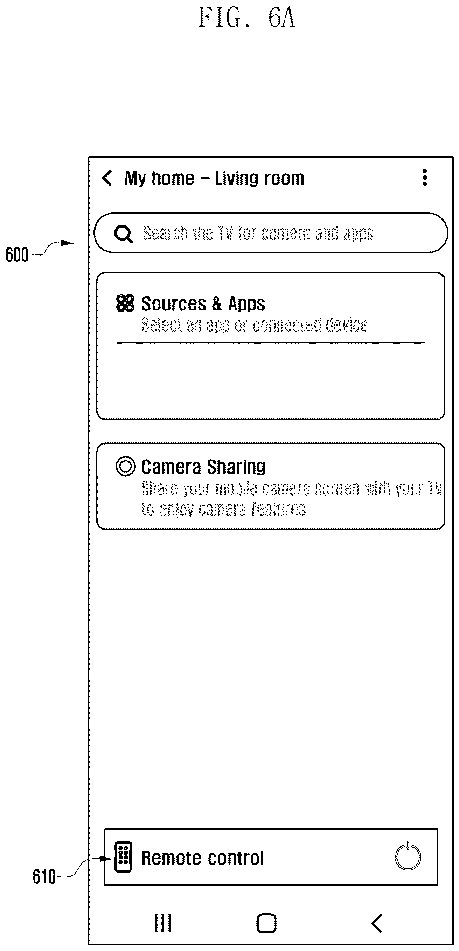

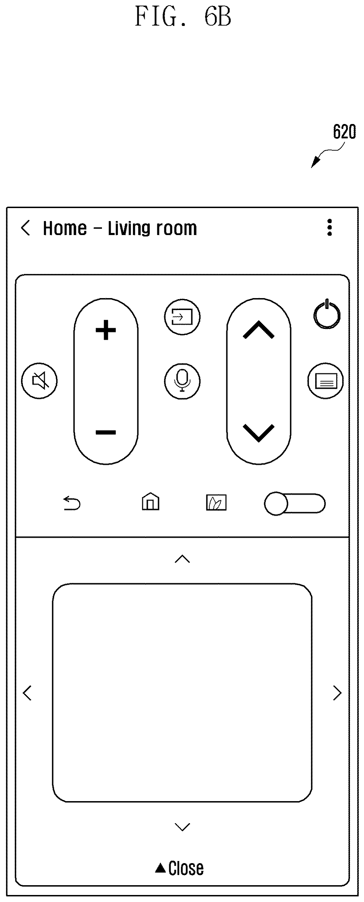

FIG. 5 is a flowchart 500 for controlling an external electronic device by an electronic device according to an embodiment. In the following embodiment, each operation may be sequentially performed, but is not necessarily performed sequentially. For example, the order of each operation may be changed, and at least two operations may be performed in parallel. For example, the electronic device of FIG. 5 may be the electronic device 101 of FIG. 1, FIG. 2, or FIG. 3. For example, at least a portion of FIG. 5 may be described with reference to FIGS. 6A and 6B. FIG. 6A is an example of an application program related to the Internet of Things executed in an electronic device according to an embodiment. FIG. 6B is an example of a user interface for controlling an external electronic device by an electronic device according to an embodiment.

According to an embodiment referring to FIGS. 5, 6A, and 6B, in operation 501, an electronic device (e.g., the electronic device 101 of FIG. 1, FIG. 2, or FIG. 3) or a processor (e.g., the processor 120 of FIG. 1 or the processor 300 of FIG. 3) may identify the AP (or subnet) of the external electronic device 200 to be controlled by the electronic device 101 through the IoT function. For example, when detecting the occurrence of an event related to the control of the external electronic device 200, the processor 300 may identify an AP (e.g., AP2 (220) (or a subnet) to which the external electronic device 200 is connected. For example, the processor 300 may identify the AP2 220 to which the external electronic device 200 is connected from information related to the external electronic device 200 stored in the memory 320 of the electronic device 101 based on the occurrence of an event related to the control of the external electronic device 200. For example, the processor 300 may identify the AP2 220 to which the external electronic device 200 is connected from information related to the external electronic device 200 received from the external electronic device 200 based on the occurrence of an event related to the control of the external electronic device 200.

For example, when at least one of a user input (e.g., a touch input) or a gesture input related to the control of the external electronic device 200 is detected, the processor 300 may determine that an event related to the control of the external electronic device 200 has occurred. For example, the processor 300 may determine that an event related to the control of the external electronic device 200 has occurred based on the execution of an application program related to the control of the external electronic device 200. For example, the processor 300 may determine that an event related to the control of the external electronic device 200 has occurred based on the reception of information related to the external electronic device 200. For example, information related to the external electronic device 200 may be received through Bluetooth or BLE. For example, the information related to the external electronic device 200 may include at least one of identification information (e.g., IMSI or phone number) of the external electronic device 200, identification information (e.g., SSID) of an AP to which the external electronic device 200 is connected, or security information of an AP (e.g., the AP2 220) to which at least one of the external electronic devices 200 is connected. For example, when it is identified that the electronic device 101 has entered (or moved to, or located at) a designated area (or designated place) (e.g., the space 240 of FIG. 2), the processor 300 may determine that an event related to the control of the external electronic device 200 has occurred. For example, the designated area may include a space in which at least one external electronic device 200 is located (or positioned) for the electronic device 101 to control through the Internet of Things. For example, when the distance between the electronic device 101 and the external electronic device 200 is within a specified reference distance, the processor 300 may determine that an event related to the control of the external electronic device 200 has occurred.

For example, as illustrated in FIG. 6A, the processor 300 may control the output device (e.g., display) of the electronic device 101 to output (or display) a user interface (or service screen) 600 related to an application program based on the execution of the application program related to the control of the external electronic device 200. When a selection input of an object 610 related to the control of the external electronic device 200 is detected in the user interface 600 related to the application program, the processor 300 may determine that an event related to the control of the external electronic device 200 has occurred. For example, the user interface 600 related to the application program may include a list of external electronic devices 200 that may be controlled by the electronic device 101 and the object 610 related to the control of each external electronic device 200.

According to an embodiment, in operation 503, the electronic device (e.g., the electronic device 101) or the processor (e.g., the processor 120 or the processor 300) may identify whether the AP of the electronic device 101 and the AP to which the external electronic device 200 is connected are different from each other. For example, the AP of the electronic device 101 may indicate an AP (or a subnet) to which the electronic device 101 is connected (or linked) for wireless LAN communication.

According to an embodiment, when the AP of the electronic device 101 and the AP to which the external electronic device 200 is connected are different from each other (e.g., "Yes" of operation 503), the electronic device (e.g., the electronic device 101) or the processor (e.g., the processor 120 or the processor 300) may connect to an AP (e.g., the AP2 220 of FIG. 2) to which the external electronic device 200 is connected in operation 505. For example, when the AP of the electronic device 101 and the AP (e.g., AP2 220) (or subnet) to which the external electronic device 200 is connected are different from each other, the processor 300 may control the communication circuit 310 to switch (or change) the wireless LAN communication (or subnet) of the electronic device 101 to an AP to which the external electronic device 200 is connected, based on information related to the AP to which the external electronic device 200 is connected.

According to an embodiment, in operation 507, the electronic device (e.g., the electronic device 101) or the processor (e.g., the processor 120 or the processor 300) may transmit control information related to the external electronic device 200 to the external electronic device 200. For example, when wireless LAN communication of the electronic device 101 is switched, the processor 300 may control the output device (e.g., display) of the electronic device 101 to output (or display) a user interface 620 related to the control of the external electronic device 200, as illustrated in FIG. 6B. The processor 300 may control the communication circuit 310 to transmit control information obtained through the user interface 620 related to the control of the external electronic device 200 to the external electronic device 200. For example, the switching of wireless LAN communication of the electronic device 101 may include a series of operations of switching the AP to which the electronic device 101 is connected to the AP to which the external electronic device 200 is connected.

According to an embodiment, when the AP of the electronic device 101 and the AP to which the external electronic device 200 is connected are the same (e.g., "No" in operation 503), the electronic device (e.g., the electronic device 101) or the processor (e.g., the processor 120 or 300) may transmit control information related to the external electronic device 200 to the processor 120 or the processor 300 the external electronic device 200 in operation 507. For example, when the AP of the electronic device 101 and the AP (e.g., AP2 220) (or subnet) to which the external electronic device 200 is connected are the same, as illustrated in FIG. 6B, the processor 300 may control the user interface 620 related to the control of the external electronic device 200 with an output device (e.g., a display) of the electronic device 101. The processor 300 may control the communication circuit 310 to transmit control information obtained through the user interface 620 related to the control of the external electronic device 200 to the external electronic device 200.

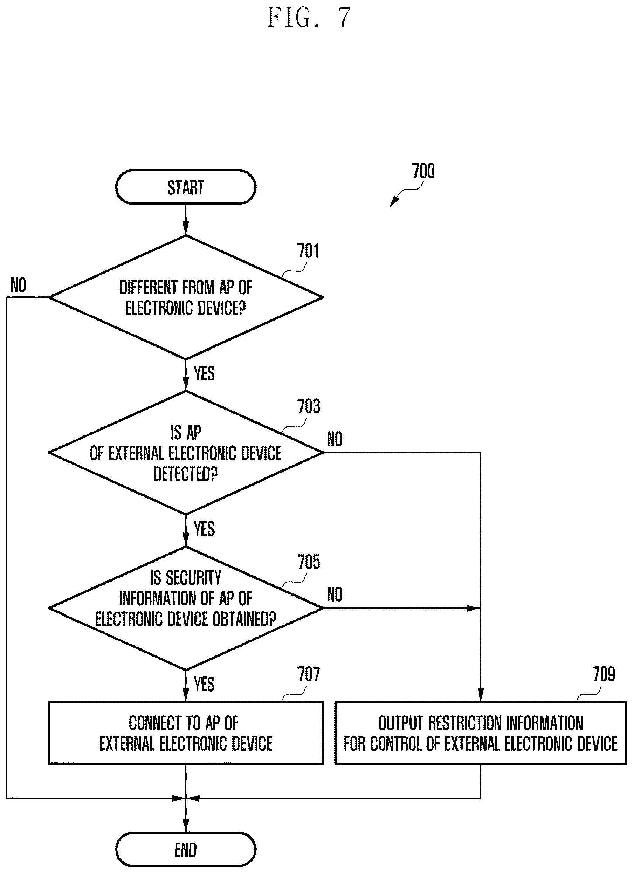

FIG. 7 is a flowchart 700 for switching a wireless LAN connection in an electronic device according to an embodiment. According to an embodiment, at least a portion of FIG. 7 may include detailed descriptions of operations 503 and 505 of FIG. 5. In the following embodiment, each operation may be sequentially performed, but is not necessarily performed sequentially. For example, the order of each operation may be changed, and at least two operations may be performed in parallel. For example, the electronic device of FIG. 7 may be the electronic device 101 of FIG. 1, FIG. 2, or FIG. 3.

According to an embodiment referring to FIG. 7, when obtaining information related to the AP (e.g., the AP2 220 of FIG. 2) to which the external electronic device 200 is connected (e.g., operation 501 of FIG. 5), in operation 701, the electronic device (e.g., the electronic device 101 of FIG. 1, FIG. 2 or FIG. 3) or the processor (e.g., the processor 120 of FIG. 1 or the processor 300 of FIG. 3) may identify whether the AP of the electronic device 101 and the AP to which the external electronic device 200 is connected are different from each other. For example, the AP of the electronic device 101 may indicate an AP (or a subnet) to which the electronic device 101 is connected (or linked) for wireless LAN communication.

According to an embodiment, when the AP of the electronic device 101 and the AP to which the external electronic device 200 is connected are the same (e.g., "No" in operation 701), the electronic device (e.g., the electronic device 101) or the processor (e.g., the processor 120 or the processor 300) may terminate an embodiment for switching the wireless LAN connection of the electronic device 101. For example, when the AP of the electronic device 101 and the AP (e.g., AP2 220) (or subnet) to which the external electronic device 200 is connected are the same, the processor 300 may determine that the external electronic device 200 may be controlled through the AP to which the electronic device 101 is connected.

According to an embodiment, when the AP of the electronic device 101 and the AP to which the external electronic device 200 is connected are different from each other (e.g., "Yes" in operation 701), in operation 703, the electronic device (e.g., the electronic device 101) or the processor (e.g., the processor 120 or the processor 300) may identify whether the AP to which the external electronic device 200 is connected is detected. For example, when receiving a signal having a received signal strength exceeds a specified magnitude from the AP to which the external electronic device 200 is connected, the processor 300 may determine that the AP to which the external electronic device 200 is connected is detected. For example, when a signal having a received signal strength exceeds a specified magnitude is not received from the AP to which the external electronic device 200 is connected, the processor 300 may determine that the AP to which the external electronic device 200 is connected is not detected. For example, the specified magnitude may include a minimum signal strength determined to be capable of decoding the signal received from the external electronic device 200.

According to an embodiment, when detecting the AP to which the external electronic device 200 is connected, in operation 705, the electronic device (e.g., the electronic device 101) or the processor (e.g., the processor 120 or the processor 300) may identify security information related to the AP to which the external electronic device 200 is connected. For example, the processor 300 may identify security information related to the AP2 220 to which the external electronic device 200 stored in the memory 320 is connected. For example, the security information related to the AP2 220 may be stored in the memory 320 based on the connection history of the electronic device 101. For example, the security information related to the AP2 220 may be stored in the memory 320 based on the reception of information related to the external electronic device 200 from the server 400. For example, the processor 300 may identify security information related to the AP2 220 to which the external electronic device 200 is connected from information related to the external electronic device 200 received from the external electronic device 200 based on the occurrence of an event related to the control of the external electronic device 200.

According to an embodiment, in operation 707, the electronic device (e.g., the electronic device 101) or the processor (e.g., the processor 120 or the processor 300) may connect to the AP (e.g., the AP2 220 of FIG. 2) to which the external electronic device 200 is connected based on security information related to the AP to which the external electronic device 200 is connected. For example, the connection between the electronic device 101 and the AP of the electronic device 101 may be released based on the connection with the AP to which the external electronic device 200 is connected.

According to an embodiment, when the AP to which the external electronic device 200 is connected is not detected (e.g., "No" in operation 703), in operation 709, the electronic device (e.g., the electronic device 101) or the processor (e.g., the processor 120 or the processor 300) may output restriction information related to the control of the external electronic device 200. For example, when the AP to which the external electronic device 200 is connected is not detected, the processor 300 may determine that the AP (or subnet) of the external electronic device 200 and the AP of the electronic device 101 are different from each other and thus may not control the external electronic device 200. The processor 300 may control the output device of the electronic device 101 to output information indicating that use (or control) of the external electronic device 200 is restricted. For example, the output device of the electronic device 101 may include at least one of a vibration motor, a display, an audio output device, or a flash.

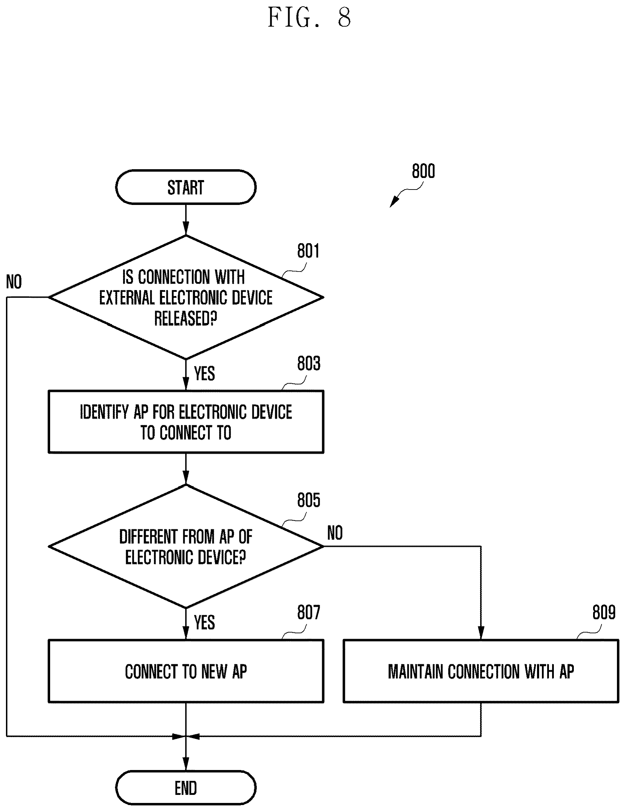

FIG. 8 is a flowchart 800 for wireless LAN communication in an electronic device according to an embodiment. In the following embodiment, each operation may be sequentially performed, but is not necessarily performed sequentially. For example, the order of each operation may be changed, and at least two operations may be performed in parallel. For example, the electronic device of FIG. 8 may be the electronic device 101 of FIG. 1, FIG. 2, or FIG. 3.

According to an embodiment referring to FIG. 8, in operation 801, the electronic device (e.g., the electronic device 101 of FIG. 1, FIG. 2 or FIG. 3) or the processor (e.g., the processor 120 of FIG. 1 or the processor 300 of FIG. 3) may identify whether the control of the external electronic device 200 is terminated. For example, when an application program (or function) related to the control of the external electronic device 200 is terminated, the processor 300 may determine that the control of the external electronic device 200 has been terminated. For example, when it is determined that the electronic device 101 is out of a designated area (or a designated place) (e.g., the space 240 of FIG. 2), the processor 300 may determine that the control of the external electronic device 200 has been terminated. For example, when the distance between the electronic device 101 and the external electronic device 200 exceeds a specified reference distance, the processor 300 may determine that the control of the external electronic device 200 has been terminated.

According to an embodiment, when the control of the external electronic device 200 has not been terminated (e.g., "No" in operation 801), the electronic device (e.g., the electronic device 101) or the processor (e.g., the processor 120 or the processor 300) may terminate an embodiment for wireless LAN communication of the electronic device 101.

According to an embodiment, when it is determined that the control of the external electronic device 200 has been terminated (e.g., "Yes" in operation 801), in operation 803, the electronic device (e.g., the electronic device 101) or the processor (e.g., the processor 120 or the processor 300) may identify an AP to which the electronic device 101 may connect. For example, when it is determined that the control of the external electronic device 200 has been terminated, the processor 300 may control the communication circuit 310 to perform a search related to the AP. The processor 300 may identify (or select) an AP to which the electronic device 101 may connect based on the channel state information of the at least one AP detected through a search related to the AP. For example, the AP to which the electronic device 101 may connect may include an AP having the best channel state among at least one AP detected through a search related to the AP. For example, the channel state information may include at least one of the received signal strength indicator (RSSI), the reference signal received quality (RSRQ), the reference signal received power (RSRP), the signal to interference and noise ratio (SINR), or the bit error rate (BER).

According to an embodiment, in operation 805, the electronic device (e.g., the electronic device 101) or the processor (e.g., the processor 120 or the processor 300) may identify whether the AP to which the electronic device 101 is connected and the AP to which the electronic device 101 may connect are different from each other.

According to an embodiment, when the AP to which the electronic device 101 is connected and the AP to which the electronic device 101 may connect are different from each other (e.g., "Yes" in operation 805), in operation 807, the electronic device (e.g., the electronic device 101) or the processor (e.g., the processor 120 or the processor 300) may connect to the AP to which the electronic device 101 may connect identified through a search related to the AP is to be connected. For example, the processor 300 may control the communication circuit 310 so that the AP of the electronic device 101 is switched to the AP to which the electronic device 101 may connect identified through a search related to the AP.

According to an embodiment, when the AP to which the electronic device 101 is connected and the AP to which the electronic device 101 may connect are the same (e.g., "No" in operation 805), in operation 809, the electronic device (e.g., the electronic device 101) or the processor (e.g., the processor 120 or the processor 300) may maintain the connection to the AP of the electronic device 101.

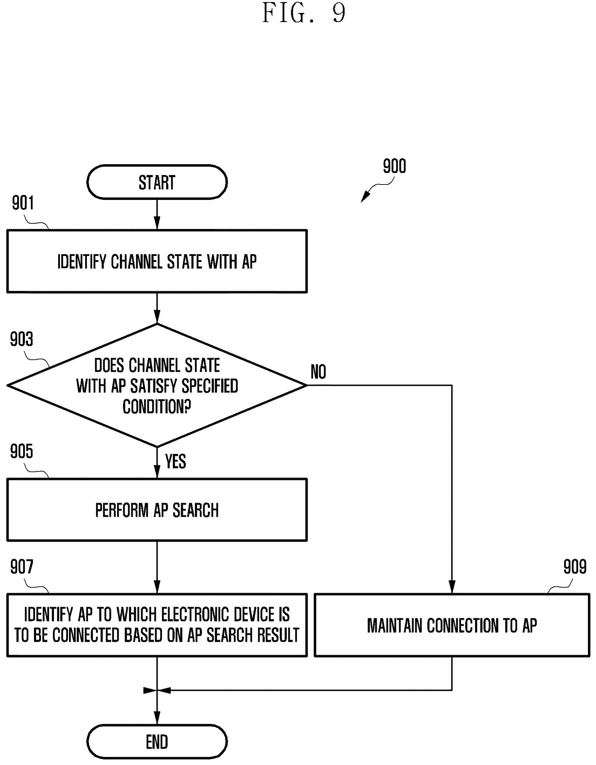

FIG. 9 is a flowchart 900 for selecting an AP by an electronic device according to an embodiment. According to an embodiment, at least a portion of FIG. 9 may include detailed descriptions of operation 803 of FIG. 8. In the following embodiment, each operation may be sequentially performed, but is not necessarily performed sequentially. For example, the order of each operation may be changed, and at least two operations may be performed in parallel. For example, the electronic device of FIG. 9 may be the electronic device 101 of FIG. 1, FIG. 2, or FIG. 3.

According to an embodiment referring to FIG. 9, when it is determined that the control of the external electronic device 200 is terminated (e.g., "Yes" in operation 801), in operation 901, the electronic device (e.g., the electronic device 101 of FIG. 1, FIG. 2 or FIG. 3) or the processor (e.g., the processor 120 of FIG. 1 or the processor 300 of FIG. 3) may identify a channel state with the AP to which the electronic device 101 is connected.

According to an embodiment, in operation 903, the electronic device (e.g., the electronic device 101) or the processor (e.g., the processor 120 or the processor 300) may identify whether the channel state with the AP to which the electronic device 101 is connected satisfies a specified condition. For example, when the received signal strength (e.g., RSSI) with the AP to which the electronic device 101 is connected is less than or equal to a specified reference value, the processor 300 may determine that the specified condition is satisfied. For example, a state that satisfies the specified condition may include a state determined to perform an AP search.

For example, when the received signal strength (e.g., RSSI) with the AP to which the electronic device 101 is connected exceeds a specified reference value, the processor 300 may determine that the specified condition is not satisfied. For example, a state in which the specified condition is not satisfied may include a state in which it is determined that the electronic device 101 does not perform an AP search while maintaining connection with the connected AP.

For example, when the channel state with the AP to which the electronic device 101 is connected satisfies a specified condition (e.g., "Yes" in operation 903), in operation 905, the electronic device (e.g., the electronic device 101) or the processor (e.g., the processor 120 or the processor 300) may perform a search related to the AP. For example, when the channel state with the AP to which the electronic device 101 is connected satisfies the specified condition, the processor 300 may determine that wireless LAN communication through the AP to which the electronic device 101 is connected may be restricted. The processor 300 may control the communication circuit 310 to perform a search related to the AP based on the determination that wireless LAN communication may be restricted. For example, a state in which wireless LAN communication is restricted may include a state in which the communication quality of wireless LAN communication (e.g., quality of service (QoS)) cannot satisfy the specified quality, or wireless LAN communication is not possible.

According to an embodiment, in operation 907, the electronic device (e.g., the electronic device 101) or the processor (e.g., the processor 120 or the processor 300) may identify (or select) an AP to which the electronic device 101 may connect based on the search result related to the AP. For example, the processor 300 may select the AP having the best channel state among at least one AP detected through an AP-related search as the AP to which the electronic device 101 may connect. For example, the AP having the best channel state may include the AP having the highest received signal strength.

For example, when the channel state with the AP to which the electronic device 101 is connected does not satisfy a specified condition (e.g., "No" in operation 903), in operation 909, the electronic device (e.g., the electronic device 101) or the processor (e.g., the processor 120 or the processor 300) may maintain a connection to the AP of the electronic device 101. For example, when the channel state with the AP to which the electronic device 101 is connected does not satisfy the specified condition, the processor 300 may determine that wireless LAN communication may be performed through an AP to which the electronic device 101 is connected. The processor 300 may control the communication circuit 310 to maintain the connection with the AP to which the electronic device 101 is connected based on the determination that wireless LAN communication may be performed.

According to an embodiment, a method performed by an electronic device (e.g., the electronic device 101 of FIG. 1, FIG. 2 or FIG. 3) may include identifying a second access point (AP) to which an external electronic device 200 to be controlled by the electronic device 101 is connected. According to an embodiment, a method performed by an electronic device may include connecting to the second AP when the first AP to which the electronic device is connected and the second AP to which the external electronic device is connected are different from each other. According to an embodiment, a method performed by an electronic device may include transmitting control-related data to the external electronic device based on the connection to the second AP.

According to an embodiment, identifying the second AP may include identifying the second AP to which the external electronic device is connected based on the information related to the external electronic device stored in the memory of the electronic device when an application program related to the control of the external electronic device is executed.

According to an embodiment, identifying the second AP may include identifying the second AP to which the external electronic device is connected from the control signal when a control signal related to an AP is received from at least one of a server or the external electronic device.

According to an embodiment, connecting to the second AP may include identifying security information related to the second AP when the first AP to which the electronic device is connected and the second AP to which the external electronic device is connected are different from each other, and connecting to the second AP based on the security information related to the second AP.

According to an embodiment, identifying the second AP may include identifying the second AP to which the external electronic device is connected based on the information related to the external electronic device stored in the memory of the electronic device when it is determined that the electronic device is located in a designated area related to the external electronic device.

According to an embodiment, connecting to the second AP may include identifying whether the second AP is detected when the first AP to which the electronic device is connected and the second AP to which the external electronic device is connected are different from each other, and connecting to the second AP when the second AP is detected.

According to an embodiment, a method performed by an electronic device may include outputting information related to the use restriction of the external electronic device when the second AP is not detected.

According to an embodiment, a method performed by an electronic device may include transmitting control-related data to the external electronic device while maintaining the connection with the first AP to which the electronic device is connected when the first AP to which the electronic device is connected and the second AP to which the external electronic device is connected are the same.

According to an embodiment, a method performed by an electronic device may include identifying an AP to which the electronic device is to connect through an AP search and connecting to the identified AP when it is determined that the control of the external electronic device is terminated.

According to an embodiment, identifying the AP may include identifying the channel state with the AP to which the electronic device is connected when it is determined that control of the external electronic device has been terminated and identifying an AP to which the electronic device is to connect through an AP search when it is determined that an AP search is performed based on the channel state with the AP to which the electronic device is connected (e.g., when the specified condition is satisfied).

The embodiments of the disclosure in the specification and drawings are merely specific examples intended to facilitate easy explanation of the technical content of the embodiments and to help understanding of the embodiments of the disclosure, and are not intended to limit the scope of the embodiments of the disclosure. Therefore, the scope of the embodiments of the disclosure should be interpreted to include all modifications or variations derived from the technical concepts of the embodiments of the disclosure in addition to the embodiments disclosed herein.

## Claims

1. An electronic device (101) comprising:
a communication circuit (310) supporting wireless LAN communication;
at least one processor (300) operatively connected to the communication circuit; and
memory (320) storing instructions,
wherein the instructions, when executed by the at least one processor (300), cause the electronic device (101) to:
identify a second access point (AP) to which an external electronic device (200) is connected;
connect to the second AP when a first AP to which the electronic device (101) is connected and the second AP are different from each other; and
transmit control-related data to the external electronic device (200) based on the connection to the second AP.

2. The electronic device of claim 1,
wherein the instructions, when executed by the at least one processor (300), cause the electronic device (101) to identify the second AP to which the external electronic device (200) is connected based on the information related to the external electronic device (200) stored in the memory (320) when an application program related to the control of the external electronic device (200) is executed.

3. The electronic device of claim 1,
wherein the instructions, when executed by the at least one processor (300), cause the electronic device (101) to identify the second AP to which the external electronic device (200) is connected from the control signal when a control signal related to an AP is received from at least one of a server (400) or the external electronic device (200).

4. The electronic device of claim 1,
wherein the instructions, when executed by the at least one processor (300), cause the electronic device (101) to:
identify security information related to the second AP when the first AP to which the electronic device (101) is connected and the second AP are different from each other; and
connect to the second AP based on the security information related to the second AP.

5. The electronic device of claim 1,
wherein the instructions, when executed by the at least one processor (300), cause the electronic device (101) to identify the second AP to which the external electronic device (200) is connected based on the information related to the external electronic device (200) stored in the memory (320) when it is determined that the electronic device (101) is located in a designated area related to the external electronic device (200).

6. The electronic device of claim 1,
wherein the instructions, when executed by the at least one processor (300), cause the electronic device (101) to:
identify whether the second AP is detected when the first AP to which the electronic device (101) is connected and the second AP are different from each other; and
connect to the second AP when the second AP is detected.

7. The electronic device of claim 6, further comprising an output device,
wherein the instructions, when executed by the at least one processor (300), cause the electronic device (101) to output information related to the use restriction of the external electronic device (200) through the output device when the second AP is not detected.

8. The electronic device of claim 1,
wherein the instructions, when executed by the at least one processor (300), cause the electronic device (101) to transmit control-related data to the external electronic device (200) while maintaining the connection with the first AP to which the electronic device (101) is connected when the first AP to which the electronic device (101) is connected and the second AP are the same.

9. A method performed by an electronic device (101), the method comprising:
identifying a second access point (AP) to which an external electronic device (200) to be controlled by the electronic device (101) is connected;
connecting to the second AP when a first AP to which the electronic device (101) is connected and the second AP are different from each other; and
transmitting control-related data to the external electronic device (200) based on the connection to the second AP.

10. The method of claim 9,
wherein the identifying the second access point (AP) comprises identifying the second AP to which the external electronic device (200) is connected based on the information related to the external electronic device (200) stored in the memory (320) of the electronic device (101) when an application program related to the control of the external electronic device (200) is executed.

11. The method of claim 9,
wherein the identifying the second access point (AP) comprises identifying the second AP to which the external electronic device (200) is connected from the control signal when a control signal related to an AP is received from at least one of a server (400) or the external electronic device (200).

12. The method of claim 9,
wherein the connecting to the second AP comprises:
identifying security information related to the second AP when the first AP to which the electronic device (101) is connected and the second AP are different from each other; and
connecting to the second AP based on the security information related to the second AP.

13. The method of claim 9,
wherein the identifying the second access point (AP) comprises identifying the second AP to which the external electronic device (200) is connected based on the information related to the external electronic device (200) stored in the memory (320) of the electronic device (101) when it is determined that the electronic device (101) is located in a designated area related to the external electronic device (200).

14. The method of claim 9,
wherein the connecting to the second AP comprises:
identifying whether the second AP is detected when the first AP to which the electronic device (101) is connected and the second AP are different from each other; and
connecting to the second AP when the second AP is detected.

15. The method of claim 14, further comprising outputting information related to the use restriction of the external electronic device (200) when the second AP is not detected.
